# FASCICULE DE BREVET EUROPEEN

(11) **EP 1 226 560 B1**
(45) Date de publication et mention de la délivrance du brevet: **11.01.2006**
(21) Numéro de dépôt: 00969632.9
(22) Date de dépôt: 17.10.2000
(51) Int. Cl.: G07F 7/10, G06K 7/00

(54) **PROCEDE, SYSTEME ET TERMINAL D'AUTHENTIFICATION DU RESULTAT D'UNE COMMANDE DANS UN JETON**
VERFAHREN , VORRICHTUNG UND TERMINAL ZUM BEGLAUBIGEN DES ERGEBNISSES EINES DATENTRÄGERBEFEHLS
METHOD, SYSTEM AND TERMINAL FOR AUTHENTICATING THE RESULT OF AN INSTRUCTION IN A TOKEN

(30) Priorité: 29.10.1999 FR 9913632
(43) Date de publication de la demande: 31.07.2002
(73) Titulaire: Axalto S.A., 92120 Montrouge (FR)
(72) Inventeur: WLODARCZYK, Lukasz, F-75015 Paris (FR)
(74) Mandataire: Cassagne, Philippe M.J.
(86) Numéro de dépôt international: PCT/FR2000/002894
(87) Numéro de publication internationale: WO 2001/031595

(56) Documents cités:
- EP-A- 0 559 205
- EP-A- 0 881 590
- FR-A- 2 684 466
- FR-A- 2 774 196

## Description

La présente invention concerne un procédé; un système et le terminal d'authentification d'un résultat d'exécution de commande dans un jeton connecté à un terminal, ledit terminal comportant un dispositif de communication d'une information à un utilisateur et transmettant ladite commande audit jeton, ledit jeton transmettant un résultat au terminal suite à ladite exécution.

L'invention trouve une application particulièrement avantageuse dans des domaines tels quc le domaine bancaire, téléphonique ou santé, nécessitant une authentification d'un résultat d'exécution de commande, par exemple lors d'opérations de transactions par internet réalisées entre un acheteur d'un service et un fournisseur dudit service. Le fournisseur est par exemple un concessionnaire de voitures. Le fournisseur appelé utilisateur possède un jeton connecté à un terminal relié à un réseau de communication. L'acheteur possède un certificat tel que défini dans la norme X509 éditée par l'ISO. Ce certificat est unique et propre à un acheteur. Il est public. Il comporte des données telles qu'une clef publique, le nom et l'adresse électronique de l'acheteur, des dates limites de validité du certificat etc. Lorsque l'acheteur veut acquérir une voiture, il émet une demande de transaction via le réseau de communication. Afin de vérifier la demande de transaction entre l'acheteur et le fournisseur, un procédé connu de l'état de la technique comporte les étapes selon lesquelles :
- on envoie le certificat de l'acheteur au fournisseur,
- on calcule une signature sur des données sensibles de la demande de transaction au moyen d'une clef dite privée associée à l'acheteur,
- on transmet la demande de transaction et ladite signature au terminal du fournisseur via le réseau de communication,
- dans le jeton connecté au terminal dudit fournisseur, on exécute une commande de vérification de signature de la demande de transaction au moyen de la clef publique de l'acheteur se trouvant dans le certificat de ce dernier,
- on affiche sur l'écran dudit terminal un message reflétant le résultat de la vérification, et
- on autorise la transaction dans le cas où le résultat affiché est positif.

Bien que, grâce à ce procédé, le fournisseur peut vérifier la signature d'une demande de transaction, ce procédé ne garantit pas pleinement au fournisseur que les données de la demande de transaction arrivant sur son terminal n'ont pas été modifiées préalablement par un fraudeur espionnant le réseau. Par exemple, si la demande de transaction comporte une adresse de livraison pour la voiture, un fraudeur peut modifier cette adresse et se faire livrer la voiture aux frais de l'acheteur. Bien entendu, la vérification de la signature sera fausse, mais le fraudeur peut également, par l'intermédiaire du réseau, placer sur le terminal du fournisseur un virus interceptant le résultat de la vérification de signature issu du jeton et permettant d'afficher à la place d'un résultat faux, un résultat positif sur l'écran dudit terminal.

Le demande de brevet européen EP 0 881 590 concerne un protocole de communication pour carte à mémoire asynchrone. Lorsqu'un lecteur de carte asynchrone envoie une demande de réponse, il est tributaire de la carte qui est maître du moment où elle donne sa réponse. L'invention consiste à rendre le lecteur de carte maître du moment de l'envoi du message de la réponse afin de pouvoir tester et personnaliser plusieurs cartes en parallèles et donc d'améliorer le temps de test et de personnalisation de ce type de carte.

Aussi un problème technique à résoudre par l'objet de la présente invention est de proposer un procédé d'authentification d'un résultat d'exécution de commande dans un jeton connecté à un terminal, ledit terminal comportant un dispositif de communication d'une information à un utilisateur et transmettant ladite commande audit jeton, ledit jeton transmettant un résultat au terminal suite à ladite exécution, qui permette d'éviter qu'un fraudeur intercepte et modifie le résultat de l'exécution d'une commande sans que l'utilisateur du jeton s'en aperçoive, et qui de plus soit simple à mettre en oeuvre.

Une solution au problème technique posé est définie dans les revendications 1, 8 et 9.

Ainsi, comme on le verra en détail plus loin, le procédé, le système et le terminal de l'invention permettent, en transmettant une réponse reflétant le résultat de l'exécution de la commande et comportant au moins une information numérisable entrée par un utilisateur du jeton dans le cas d'un résultat sensible, de garantir audit utilisateur que la réponse transmise par le dispositif de communication du terminal correspond bien au résultat établi par ledit jeton.

La description qui va suivre en regard des dessins annexés, donnée à titre d'exemple non limitatif, fera bien comprendre en quoi consiste l'invention et comment elle peut être réalisée.
La figure 1 est un schéma d'un terminal et d'un jeton.
La figure 2 est un schéma représentant un premier échange de données entre le terminal et le jeton de la figure 1.
La figure 3 est un schéma représentant un deuxième échange entre le terminal et le jeton de la figure 1.
La figure est un schéma représentant un troisième échange entre le terminal et le jeton de la figure 1.

Le présent exposé de l'invention a trait à l'exemple d'une transaction par internet. Néanmoins, il est bien entendu que l'invention s'applique de manière générale à toute autre application nécessitant une vérification d'exécution de commande quand un terminal n'est pas sécurisé.

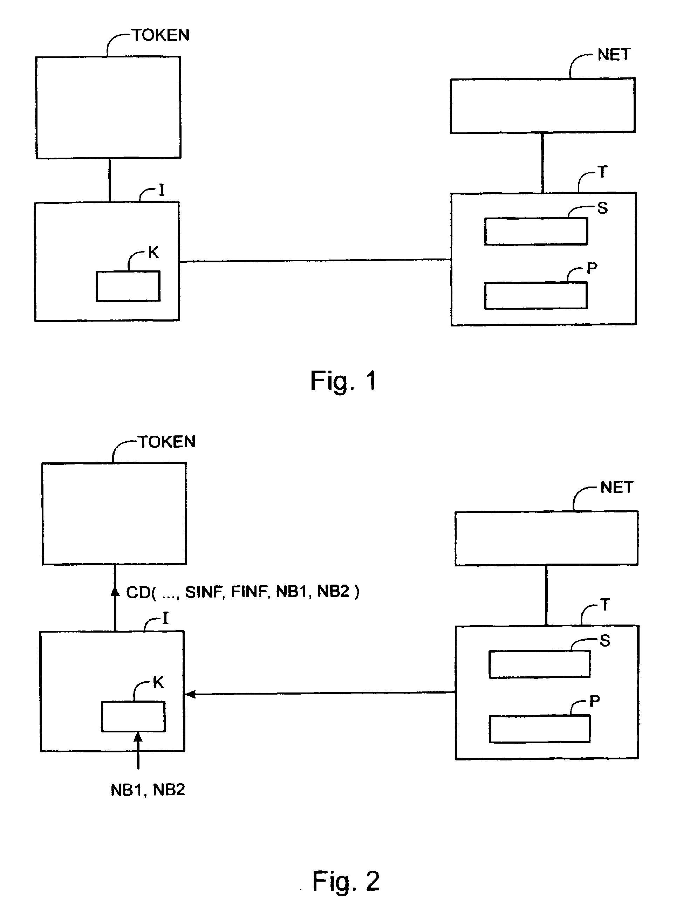

Sur la figure 1 sont représentés un jeton TOKEN et un terminal T. Le terminal est relié à un réseau de communication NET et comporte un dispositif de communication S d'information à un utilisateur et un programme applicatif P ou logiciel permettant de fournir un ou plusieurs services. Le jeton est relié à une interface I comportant un dispositif de saisie K d'information. Pour effectuer un service, une commande CD est envoyée par le programme applicatif P dans le jeton pour être exécutée, comme par exemple une vérification de signature relative à une transaction. Une commande CD comporte des paramètres d'entrée PAR. Par exemple, une commande de vérification de signature comporte des paramètres tels que :
- la signature à vérifier,
- les données de la transaction signées.

Afin d'authentifier un résultat d'exécution de la commande CD dans ledit jeton TOKEN, dans une première étape, préalablement à l'envoi de la commande CD par le terminal T dans le jeton TOKEN, au moyen du programme applicatif P on vérifie si la commande comporte un caractère sensible. Une commande comporte un caractère sensible si l'issue de cette commande est importante pour le bon fonctionnement et la sécurité du jeton ainsi que du service proposé, ici, de la transaction. Bien entendu, pour chaque service, dans le programme applicatif P, on détermine au préalable des indices de bon fonctionnement et on classe chaque commande en lui attribuant un caractère sensible ou non. Par exemple, on suppose qu'une vérification de signature comporte un caractère sensible, tandis qu'une mise à jour de données historiques d'une demande de transaction ne comporte pas de caractère sensible.

Par la suite, on envoie la commande CD à partir du terminal T dans le jeton TOKEN.

Dans le cas où la commande CD ne comporte pas de caractère sensible, on exécute la commande dans le jeton et, le cas échéant, on notifie à l'utilisateur du jeton le résultat de la commande au moyen du dispositif de communication S du terminal T.

Dans le cas contraire, pour toute commande à caractère sensible telle qu'une commande de vérification de signature, on transmet du terminal T audit jeton TOKEN une information de sécurisation SINF ainsi qu'une information de formatage FINF de ladite au moins information numérisable NB à prendre en compte dans ledit jeton. Par exemple le format doit être de type binaire ou ascii. Au moyen de l'information de sécurisation SINF, on renseigne ledit jeton qu'une commande sensible est envoyée. Selon un mode de réalisation particulier non limitatif, lesdites informations de sécurisation SINF et de formatage FINF sont des paramètres d'entrée de la commande CD envoyée.

Par exemple, une commande de vérification de signature comporte les paramètres tels que :
- la signature à vérifier,
- les données de la transaction signées,
- l'information de sécurisation,
- l'information de formatage.

Dans une deuxième étape, pour tout résultat potentiel sensible de la commande, on saisit au moins une information numérisable NB au moyen de l'interface 1 comportant le dispositif de saisie K. Selon un premier mode de réalisation non limitatif, le dispositif de saisie K est un clavier. Selon un second mode de réalisation, ledit dispositif est un écran tactile. Cela peut être également un microphone.

Selon un mode de réalisation particulier non limitatif, la ou les informations numérisables NB sont des paramètres d'entrée de la commande CD transmise à exécuter. Comme le montre la figure 2, La commande de vérification de signature comporte des paramètres tels que :
- la signature à vérifier,
- les données de la transaction signées,
- l'information de sécurisation SINF,
- l'information de formatage FINF,
- une information numérisable NB1 correspondant à un premier résultat potentiel sensible,
- une seconde information numérisable NB2 correspondant à un second résultat potentiel sensible etc.

On entend par résultat potentiel sensible, un résultat risquant de compromettre la sécurité des services offerts par le programme applicatif P dans le cas où le fraudeur parvient à modifier ledit résultat.

On notera qu'un résultat d'un commande peut être sensible dans un contexte donné et pas dans un autre. Le caractère sensible du résultat est également estimé lors de la conception du programme applicatif P.

L'exécution d'une commande CD peut donner potentiellement un résultat positif ou négatif. De plus, il peut exister différents types de résultat positif ou négatif. Par exemple, pour une commande de mise à jour de données secrètes dans un jeton, on peut avoir un premier résultat négatif indiquant une erreur d'écriture, un deuxième résultat négatif indiquant que le jeton est indisponible et qu'un essai ultérieur peut être effectué ou un résultat positif indiquant une bonne exécution de la commande. Généralement le type d'un résultat est fourni au moyen d'une valeur unique d'état SW associée renvoyée par ledit jeton. On peut estimer, par exemple, que seuls les résultats négatifs sont sensibles et par suite on saisit une ou plusieurs informations numérisables NB uniquement pour ces deux résultats négatifs potentiels.

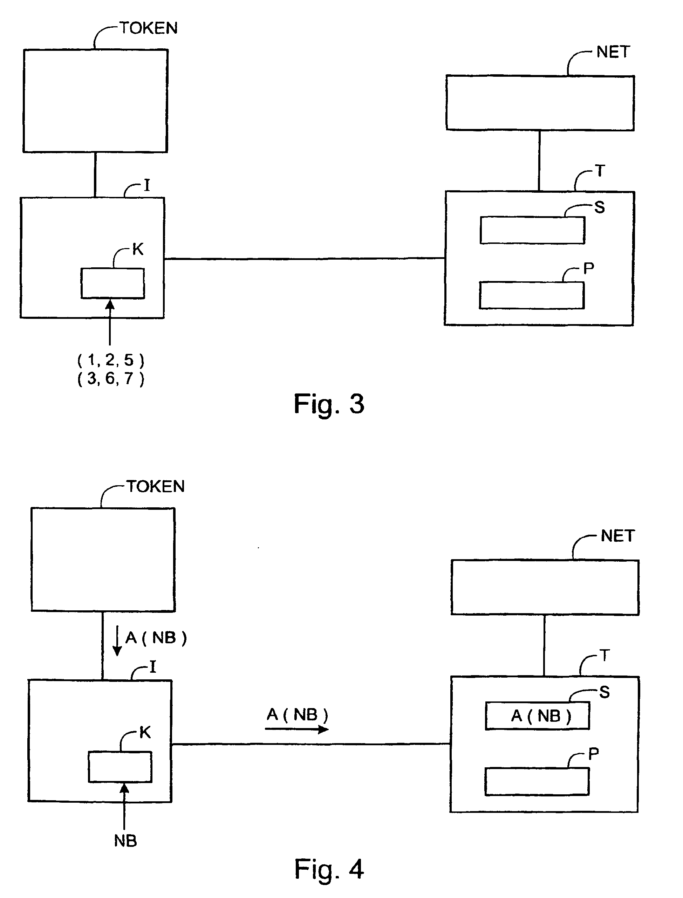

Dans l'exemple de la figure 3, pour une commande de vérification de signature, on suppose qu'on a le choix entre un seul résultat positif et un seul résultat négatif et que les deux ont un caractère sensible. Soit la signature est correcte, soit la signature est mauvaise. Au moyen d'un dispositif de saisie K, ici un clavier, on saisit des informations numérisable, dans cet exemple les chiffres un, deux et cinq pour une signature correcte et les chiffres trois, six et sept pour une mauvaise signature.

On évitera d'utiliser les mêmes informations numérisables ou des suites logiques d'informations numérisables, afin qu'un fraudeur ne puisse analyser lesdites informations et ne trouve une valeur de l'information suivante. Avantageusement, ladite au moins une information numérisable NB est aléatoire. Ainsi, le fraudeur ne peut ni simuler, ni prévoir, ni deviner ladite au moins information numérisable NB.

Selon un premier mode de réalisation non limitatif, ledit jeton TOKEN est une carte à circuit intégré et l'interface 1 est un lecteur.

Selon un deuxième mode de réalisation, ledit jeton est une clef électronique de sécurité telle que, par exemple, les clefs couramment appelées dans le langage anglo-saxon "dongle" avec une interface série, ou encore les clefs électroniques comportant une interface du type USB.

Selon un autre mode de réalisation, ledit jeton est une carte de type PCMCIA.

Avantageusement, on informe l'utilisateur dudit jeton que l'interface I est en attente de la saisie de ladite au moins une information numérisable NB. Cette information est par exemple dispensée par un message transmis à l'utilisateur par le dispositif de communication S du terminal T demandant à l'utilisateur de saisir la ou les informations numérisables correspondant aux résultats sensibles ou par un message vocal, accompagné par le clignotement d'un avertisseur lumineux porté par l'interface I.

Dans une troisième étape, on transmet audit jeton TOKEN ladite au moins une information saisie NB et on la formate selon l'information de formatage FINF transmise préalablement. Le formatage s'effectue directement dans le jeton ou dans l'interface 1. Bien entendu, dans ce dernier cas, le formatage s'effectue préalablement à la transmission de ladite information NB audit jeton TOKEN.

Dans une quatrième étape, on exécute ladite commande CD dans ledit jeton. Ladite exécution fournit un résultat RES. Le jeton TOKEN comporte des moyens d'association d'un résultat RES avec ladite au moins une information numérisable NB correspondante (non représenté). Ainsi, après avoir détecté la présence de l'information de sécurisation SINF, ledit jeton déclenche lesdits moyens d'association. Selon un autre mode de réalisation non limitatif, on peut vérifier si ladite information de sécurisation SINF est activée ou non, ladite information étant dans ce cas toujours présente en tant que paramètre d'une commande CD.

Dans une cinquième étape, comme le montre la figure 4, on transmet dudit jeton TOKEN au terminal T une réponse A reflétant le résultat RES de l'exécution de la commande, ladite réponse A comportant pour un résultat sensible ladite au moins une information numérisable NB associée audit résultat.

Selon une première variante de réalisation, la réponse A comprend ladite au moins une information numérisable NB et la valeur unique d'état SW associée au résultat. Préférentiellement, selon une seconde variante de réalisation, la réponse A transmise dudit jeton au terminal comporte uniquement ladite au moins une information numérisable NB.

On notera que le jeton étant relié à l'interface I, tous les échanges d'informations décrits se font par l'intermédiaire de ladite interface I et ce de manière sécurisée car un fraudeur pourra difficilement espionner des communications entre le jeton et ladite interface I.

Enfin, dans une dernière étape, si le résultat est sensible, on vérifie au moyen du dispositif de communication S dudit terminal T que ladite réponse comporte effectivement ladite au moins une information numérisable saisie NB.

Selon un mode de réalisation non limitatif, le dispositif de communication S est un dispositif vocal. Selon l'exemple de la figure 3 vu précédemment, le dispositif de communication S est un écran. Lors d'une vérification de signature, si le résultat est positif, on transmet au terminal T les chiffres un, deux et cinq qui sont ensuite affichés à l'écran. Si le résultat est négatif, les chiffres trois, six et sept sont affichés. Le fournisseur vérifie ainsi sur l'écran de son terminal que tout s'est bien passé. Un fraudeur qui essaye de modifier le résultat d'une commande, ne connaît pas les chiffres saisis par l'utilisateur du jeton. Dans l'exemple de la vérification de signature, si le résultat de la vérification est négatif et si le fraudeur le change en un résultat positif, la réponse A affichée à l'écran ne contiendra pas les chiffres saisis correspondants au résultat négatif. Ainsi, malgré un message affichant que la commande s'est bien exécutée, le fournisseur conclura qu'une erreur s'est quand même produite et rejettera la demande de transaction. Il en est de même pour un résultat négatif.

Cependant, le terminal T peut comporter un virus qui substitue une commande à une autre commande. Par suite, sans le savoir, l'utilisateur du jeton vérifie le résultat d'exécution d'une commande qui a été envoyée et exécutée de façon illicite, à la place d'une autre. Aussi, avantageusement, préalablement à l'exécution d'une commande CD sensible, on saisit une information d'indication IINF au moyen de l'interface I, ladite information IINF indiquant la commande sensible à exécuter (non représenté). Celle-ci est transmise audit jeton TOKEN. Préférentiellement, la saisie de l'information d'indication IINF se fait lors de la saisie des informations numérisables. Par suite, dans le jeton TOKEN, on vérifie au moyen de l'information d'indication IINF que la commande CD envoyée par le terminal T correspond à la commande escomptée par l'utilisateur. Si la vérification est positive, tout s'est bien passé et on effectue les étapes décrites précédemment à partir de la troisième étape. Dans le cas contraire, on notifie à l'utilisateur qu'une erreur s'est produite. On notera que la saisie de l'information d'indication IINF est utile dans le cas où on a définit plusieurs commandes sensibles. Si une seule commande CD est définie comme sensible, la vérification se fait automatiquement dans le jeton TOKEN sur cette unique commande, l'utilisateur ne saisit pas d'information d'indication.

## Revendications

1. Procédé d'authentification d'un résultat d'exécution de commande (CD) dans un système comprenant un terminal (T) et un jeton (TOKEN) connecté au terminal (T), le terminal (T) comportant un dispositif de communication (S), le procédé comprenant une étape d'exécution dans laquelle le jeton exécute une commande, **caractérisé en ce que** le procédé comprend:
- une étape de préparation dans laquelle le système vérifie si la commande (CD) a été préalablement classée comme sensible pour la sécurité du système, la commande (CD) pouvant générer différents résultats, chacun de ces résultats étant préalablement classé comme sensible ou non pour la sécurité du système,
si la commande a été préalablement classée comme sensible pour la sécurité du système, le procédé comprend :
- une étape de protection dans laquelle pour tous les résultats de la commande (CD) préalablement classés comme sensible, le système demande la saisie d'au moins une information numérisable (NB) au moyen d'une interface (I) associée au jeton et au terminal (T), l'interface (I) comportant un dispositif de saisie (K), la au moins une information numérisable étant transmise au jeton,
- une étape de réponse dans laquelle une réponse (A) reflétant le résultat de l'exécution de la commande (CD) est transmise du jeton (TOKEN) au terminal (T), la réponse comportant, pour un résultat de la commande (CD) préalablement classé comme sensible, la au moins une information numérisable (NB) associée au résultat,
- une étape d'authentification dans laquelle si le résultat de la commande (CD) a préalablement été classé comme sensible, le système vérifie au moyen du dispositif de communication (S) du terminal (T) que la réponse (A) comporte la au moins une information numérisable (NB) correspondant au résultat.

2. Procédé selon la revendication 1, **caractérisé en ce qu'**il comprend une étape supplémentaire selon laquelle, on informe l'utilisateur dudit jeton que l'interface (I) est en attente de la saisie de ladite au moins une information numérisable (NB).

3. Procédé selon la revendication 1, **caractérisé en ce que** ladite au moins une information numérisable (NB) est aléatoire.

4. Procédé selon la revendication 1, **caractérisé en ce qu'**il comprend une étape supplémentaire selon laquelle, on transmet du terminal (T) audit jeton (NB) une information de sécurisation (SINF) ainsi qu'une information de formatage (FINF) de ladite au moins une information numérisable (NB).

5. Procédé selon la revendication 1, **caractérisé en ce qu'**il comprend une étape supplémentaire selon laquelle, préalablement à l'exécution d'une commande (CD) préalablement classée comme sensible, on saisit une information d'indication (IINF) au moyen de l'interface (I), ladite information indiquant la commande préalablement classée comme sensible à exécuter.

6. Procédé selon la revendication 5, **caractérisé en ce qu'**il comprend une étape supplémentaire selon laquelle, dans le jeton (TOKEN), on vérifie au moyen de l'information d'indication (IINF) que la commande (CD) envoyée par le terminal (T) correspond à la commande escomptée par l'utilisateur.

7. Procédé selon la revendication 1, **caractérisé en ce que** ledit jeton (TOKEN) est une carte à circuit intégré et l'interface (I) est un lecteur.

8. Système comprenant un terminal (T) et un jeton (TOKEN) connecté au terminal (T), le terminal (T) comportant un dispositif de communication (S), le jeton étant agencé pour exécuter une commande, **caractérisé en ce que** le système comprend:
- un moyen de vérification pour vérifier si la commande (CD) a été préalablement classée comme sensible pour la sécurité du système, la commande (CD) pouvant générer différents résultats, chacun de ces résultats étant préalablement classé comme sensible ou non pour la sécurité du système,
- un moyen de protection agencé pour déterminer si la commande a été préalablement classée comme sensible pour la sécurité du système, et dans ce cas, pour tous les résultats de la commande (CD) préalablement classés comme sensible'', demander la saisie d'au moins une information numérisable (NB) au moyen d'une interface (I) associée au jeton et au terminal (T), l'interface (I) comportant un dispositif de saisie (K), la au moins une information numérisation étant transmise au jeton,
- un moyen de réponse pour transmettre du jeton au terminal (T) une réponse (A) reflétant le résultat de l'exécution de la commande (CD), la réponse comportant, pour un résultat de la commande (CD) préalablement classé comme sensible, la au moins une information numérisable (NB) associée au résultat,
- un moyen d'authentification pour déterminer si le résultat de la commande (CD) a préalablement été classé comme sensible, et dans ce cas, pour vérifier au moyen du dispositif de communication (S) du terminal (T) que la réponse (A) comporte la au moins une information numérisable (NB) correspondant au résultat.

9. Terminal (T) agencé pour opérer dans un système selon la revendication 8, le terminal comprenant:
- un moyen de vérification pour vérifier si la commande (CD) a été préalablement classée comme sensible pour la sécurité du système, la commande (CD) pouvant générer différents résultats, chacun de ces résultats étant préalablement classé comme sensible ou non pour la sécurité du système,
- un moyen de protection agencé pour déterminer si la commande a été préalablement classée comme sensible pour la sécurité du système, et dans ce cas, pour tous les résultats de la commande (CD) préalablement classés comme sensible, demander la saisie d'au moins une information numérisable (NB) au moyen d'une interface (I) associée au jeton et au terminal (T), l'interface (I) comportant un dispositif de saisie (K), la au moins une information numérisation étant transmise au jeton,
- un moyen d'authentification pour déterminer si le résultat de la commande (CD) a préalablement été classé comme sensible, et dans ce cas, pour vérifier au moyen du dispositif de communication (S) du terminal (T) que la réponse (A) comporte la au moins une information numérisable (NB) correspondant au résultat.

## Claims

1. Method to authenticate a result of executing a command (CD) in a system comprising a terminal (T) and a token (TOKEN) connected to the terminal (T), the terminal (T) including a communication device (S), the method comprising an execution step in which the token executes a command, **characterised in that** the method comprises:
- a preparation step in which the system checks whether the command (CD) has previously been classified as sensitive for the security of the system, the command (CD) being able to generate different results, each of these results having previously been classified as sensitive or not for the security of the system,
if the command has previously been classified as sensitive for the security of the system, the method comprises:
- a protection step in which for any result previously classified as sensitive of the command (CD), the system requests the input of at least one item of digitisable information (NB) via an interface (I) associated with the token and the terminal (T), the interface (I) including an input device (K), the at least one item of digitisable information being transmitted to the token,
- an answer step in which an answer (A) indicating the result of executing the command (CD) is transmitted from said token (TOKEN) to the terminal (T), the answer including, for a result previously classified as sensitive of the command (CD), the at least one item of digitisable information (NB) associated with the result,
- an authentication step in which if the result of the command (CD) has previously been classified as sensitive, the system checks using the communication device (S) of the terminal (T) that the answer (A) includes the at least one item of digitisable information (NB) corresponding to the result.

2. Method according to claim 1, **characterised in that** it includes an additional step according to which the user of said token is informed that the interface (I) is waiting for said at least one item of digitisable information (NB) to be input.

3. Method according to claim 1, **characterised in that** said at least one item of digitisable information (NB) is random.

4. Method according to claim 1, **characterised in that** it includes an additional step according to which securing information (SINF) and formatting information (FINF) of said at least one item of digitisable information (NB) are transmitted from terminal (T) to said token (NB).

5. Method according to claim 1, **characterised in that** it includes an additional step according to which, before executing a command (CD), previously classified as sensitive, indication information (IINF) is input via the interface (I), said information indicating the command previously classified as sensitive to be executed.

6. Method according to claim 5, **characterised in that** it includes an additional step according to which, in the token (TOKEN), a check is carried out using the indication information (IINF) to ensure that the command (CD) sent by the terminal (T) corresponds to the command expected by the user.

7. Method according to claim 1, **characterised in that** said token (TOKEN) is an integrated circuit card and the interface (I) is a reader.

8. System comprising a terminal (T) and a token (TOKEN) connected to the terminal (T), the terminal (T) including a communication device (S), the token being designed to execute a command, **characterised in that** the system comprises:
- a verification means to verify whether the command (CD) has previously been classified as sensitive for the security of the system, the command (CD) being able to generate different results, each of these results having previously been classified as sensitive or not for the security of the system,
- a protection means designed to determine whether the command has previously been classified as sensitive for the security of the system and, in this case, for all the results previously classified as sensitive of the command (CD), request the input of at least one item of digitisable information (NB) via an interface (I) associated with the token and the terminal (T), the interface (I) including an input device (K), the at least one item of digitisable information being transmitted to the token,
- an answering means to transmit from the token to the terminal (T) an answer (A) indicating the result of executing the command (CD), the answer including, for a result previously classified as sensitive of the command (CD), the at least one item of digitisable information (NB) associated with the result,
- an authentication means to determine whether the result of the command (CD) has previously been classified as sensitive and, in this case, to check using the communication device (S) of the terminal (T) that the answer (A) includes the at least one item of digitisable information (NB) corresponding to the result.

9. Terminal (T) designed to operate in a system according to claim 8, the terminal comprising:
- a verification means to verify whether the command (CD) has previously been classified as sensitive for the security of the system, the command (CD) being able to generate different results, each of these results having previously been classified as sensitive or not for the security of the system,
- a protection means designed to determine whether the command has previously been classified as sensitive for the security of the system and, in this case, for all the results previously classified as sensitive of the command (CD), request the input of at least one item of digitisable information (NB) via an interface (I) associated with the token and the terminal (T), the interface (I) including an input device (K), the at least one item of digitisable information being transmitted to the token,
- an authentication means to determine whether the result of the command (CD) has previously been classified as sensitive and, in this case, to check using the communication device (S) of the terminal (T) that the answer (A) includes the at least one item of digitisable information (NB) corresponding to the result.

## Patentansprüche

1. Authentifizierungsverfahren eines Befehlausführungsergebnisses (CD) in einem System mit einem Terminal (T) und einem an diesem angeschlossenen Jeton (TOKEN), wobei das Terminal (T) eine Kommunikationseinrichtung (S) und das Verfahren einen Ausführungsschritt umfassen, bei dem der Jeton einen Befehl ausführt, **dadurch gekennzeichnet, dass** das Verfahren umfasst:
- eine Vorbereitungsphase, bei der das System prüft, ob der Befehl (CD) vorab für die Sicherheit des Systems als sensibel eingestuft wurde, wobei der Befehl (CD) verschiedene Ergebnisse erzeugen kann und jedes davon für die Sicherheit des Systems vorab als sensibel oder nicht sensibel eingestuft wird,
wenn der Befehl für die Sicherheit des Systems vorab als sensibel eingestuft wurde, umfasst das Verfahren
- eine Schutzphase, bei der das System für alle vorab als sensibel eingestuften Ergebnisse des Befehls (CD) die Eingabe mindestens einer digitalisierbaren Information (NB) mit einer dem Jeton und dem Terminal (T) zugeordneten Schnittstelle (I) verlangt, wobei die Schnittstelle (I) eine Eingabevorrichtung (K) umfasst und die mindestens eine digitalisierbare Information an den Jeton übertragen wird,
- eine Antwortphase, bei der eine Antwort (A), die das Ergebnis der Ausführung des Befehls (CD) wiedergibt, vom Jeton (TOKEN) an das Terminal (T) übertragen wird, wobei die Antwort für ein Ergebnis des vorab als sensibel eingestuften Befehls (CD) die mindestens eine digitalisierbare Information (NB), die dem Ergebnis assoziiert ist, umfasst,
- eine Authentifizierungsphase, bei der, wenn das Ergebnis des Befehls (CD) vorab als sensibel eingestuft wurde, das System mithilfe der Kommunikationseinrichtung (S) des Terminals (T) prüft, ob die Antwort (A) die mindestens eine digitalisierbare Information (NB) enthält, die dem Ergebnis entspricht.

2. Verfahren gemäß Anspruch 1, **dadurch gekennzeichnet, dass** es eine zusätzliche Phase umfasst, gemäß der man den Anwender des besagten Jetons informiert, dass die Schnittstelle (I) die Eingabe der besagten mindestens einen digitalisierbaren Information (NB) erwartet.

3. Verfahren gemäß Anspruch 1, **dadurch gekennzeichnet, dass** die besagte mindestens eine digitalisierbare Information (NB) zufällig ist.

4. Verfahren gemäß Anspruch 1, **dadurch gekennzeichnet, dass** es einen zusätzlichen Schritt umfasst, gemäß dem man vom Terminal (T) an besagten Jeton (NB) eine Sicherungsinformation (SINF) sowie eine Formatierungsinformation (FINF) der besagten mindestens einen digitalisierbaren Information (NB) überträgt.

5. Verfahren gemäß Anspruch 1, **dadurch gekennzeichnet, dass** es einen zusätzlichen Schritt umfasst, gemäß dem man vor der Ausführung eines vorab als sensibel eingestuften Befehls (CD) mithilfe der Schnittstelle (I) eine Hinweisinformation (IINF) eingibt, wobei die besagte Information den auszuführenden und vorab als sensibel eingestuften Befehl angibt.

6. Verfahren gemäß Anspruch 5, **dadurch gekennzeichnet, dass** es einen zusätzlichen Schritt umfasst, gemäß dem man im Jeton (TOKEN) mithilfe der Hinweisinformation (IINF) überprüft, ob der vom Terminal (T) gesendete Befehl (CD) dem vom Anwender erwarteten Befehl entspricht.

7. Verfahren gemäß Anspruch 1, **dadurch gekennzeichnet, dass** der besagte Jeton (TOKEN) eine Karte mit integriertem Schaltkreis und die Schnittstelle (I) ein Lesegerät ist.

8. System mit einem Terminal (T) und einem an diesen angeschlossenen Jeton (TOKEN), wobei der Terminal (T) eine Kommunikationseinrichtung (S) umfasst und der Jeton zur Ausführung eines Befehls angeordnet ist, **dadurch gekennzeichnet, dass** das System umfasst:
- ein Prüfmittel zum Prüfen, ob der Befehl (CD) vorab für die Sicherheit des Systems als sensibel eingestuft wurde, wobei der Befehl (CD) zu verschiedenen Ergebnissen führen kann und jedes davon vorab als sensibel oder nicht sensibel für die Sicherheit des Systems eingestuft wurde.
- ein Schutzmittel, das angeordnet wird, um zu ermitteln, ob der Befehl vorab für die Sicherheit des Systems als sensibel eingestuft wurde und um in diesem Fall für alle Ergebnisse des vorab als sensibel eingestuften Befehls (CD) die Eingabe mindestens einer digitalisierbaren Information (NB) mithilfe einer Schnittstelle (I) zu verlangen, die dem Jeton und dem Terminal (T) zugeordnet ist, wobei die Schnittstelle (I) eine Eingabevorrichtung (K) umfasst und die mindestens eine digitalisierbare Information an den Jeton übertragen wird,
- ein Antwortmittel, um vom Jeton an das Terminal (T) eine Antwort (A) zu übertragen, die das Ergebnis der Ausführung des Befehls (CD) wiedergibt, wobei die Antwort für ein Ergebnis des vorab als sensibel eingeordneten Befehls (CD) die mindestens eine digitalisierbare Information (NB) enthält, die dem Ergebnis zugeordnet ist,
- ein Authentifizierungsmittel, um zu ermitteln, ob das Ergebnis des Befehls (CD) vorab als sensibel eingestuft worden ist und wenn dem so ist, um mithilfe der Kommunikationseinrichtung (S) des Terminals (T) zu prüfen, ob die Antwort (A) die mindestens eine digitalisierbare Information (NB) enthält, die dem Ergebnis entspricht.

9. Terminal (T), das angeordnet wird, um in einem System gemäß Anspruch 8 in Einsatz zu kommen, wobei das Terminal umfasst:
- ein Prüfmittel zum Prüfen, ob der Befehl (CD) vorab für die Sicherheit des Systems als sensibel eingestuft wurde, wobei der Befehl (CD) zu verschiedenen Ergebnissen führen kann und jedes davon vorab als sensibel oder nicht sensibel für die Sicherheit des Systems eingestuft wurde.
- ein Schutzmittel, das angeordnet wird, um zu ermitteln, ob der Befehl vorab für die Sicherheit des Systems als sensibel eingestuft wurde und um in diesem Fall für alle Ergebnisse des vorab als sensibel eingestuften Befehls (CD) die Eingabe mindestens einer digitalisierbaren Information (NB) mithilfe einer Schnittstelle (I) zu verlangen, die dem Jeton und dem Terminal (T) zugeordnet ist, wobei die Schnittstelle (I) eine Eingabevorrichtung (K) umfasst und die mindestens eine digitalisierbare Information an den Jeton übertragen wird,
- ein Authentifizierungsmittel, um zu ermitteln, ob das Ergebnis des Befehls (CD) vorab als sensibel eingestuft worden ist und wenn dem so ist, um mithilfe der Kommunikationseinrichtung (S) des Terminals (T) zu prüfen, ob die Antwort (A) die mindestens eine digitalisierbare Information (NB) enthält, die dem Ergebnis entspricht.
